# EUROPEAN PATENT APPLICATION

(11) **EP 4 632 056 A1**
(43) Date of publication of application: **15.10.2025**
(21) Application number: 23900731.3
(22) Date of filing: 07.12.2023
(51) Int. Cl.: C12G 3/04, A23L 2/00, A23L 2/52

(54) **LACTIC ACID BACTERIUM-CONTAINING BEVERAGE WITH IMPROVED DISHARMONIC TASTE FLOW AND MANUFACTURING METHOD THEREOF**

(30) Priority: 09.12.2022 JP 2022197223
(71) Applicant: Kirin Brewery Company, Limited, Tokyo 164-0001 (JP); KIRIN HOLDINGS KABUSHIKI KAISHA, Nakano-ku, Tokyo 164-0001 (JP)
(72) Inventor: OKADA Maki, Tokyo 164-0001 (JP); CHAKI Kaori, Tokyo 164-0001 (JP); TAZUMI Kyouko, Tokyo 164-0001 (JP); OGAWA Kaori, Tokyo 164-0001 (JP); NAKASHIMA Makiko, Tokyo 164-0001 (JP); ODAI Hideharu, Tokyo 164-0001 (JP)
(74) Representative: Hoffmann Eitle
(86) International application number: PCT/JP2023/043890
(87) International publication number: WO 2024/122619

(57) **Abstract**

Disclosed is a lactic acid bacteria-containing beverage, comprising: at least one ingredient selected from the group consisting of acetoin, diacetyl, 2-heptanone, acetic acid, propionic acid, and caproic acid. In the lactic acid bacteria-containing beverage, A + B + 200C + 10D + 10E + 10F is adjusted to 0.2 or more, where A is the concentration of acetoin (ppm), B is the concentration of diacetyl (ppm), C is the concentration of 2-heptanone (ppm), D is the concentration of acetic acid (ppm), E is the concentration of propionic acid (ppm), and F is the concentration of caproic acid (ppm). The taste disharmony is improved in the lactic acid bacteria-containing beverage.

## Description

### [Technical Field]

The present invention relates to a lactic acid bacteria-containing beverage with the taste disharmony improved and a method for producing the same.

### [Background Art]

Patent document 1 discloses an alcohol-containing acidic milk beverage which contains 0.5 to 7.0% by weight of non-fat milk solids, 0.2% by weight or less of milk fat, 1 to 30% by volume of ethyl alcohol, and organic acids, and which has a pH of 2.5 to 3.4 and has a predetermined absorbance at a specific wavelength. Fermented milk by lactic acid bacteria is used as a starting material for the beverage. PTL 1 discloses that such a milk beverage contains an appropriate amount of alcohol and therefore has a good flavor, and does not cause browning of the solution and aggregation and precipitation of milk proteins even after storage for a long time, and is clear and gives a good refreshing feeling.

### [PRIOR ART DOCUMENT]

### [Patent Document]

[Patent document 1] JP H08-154652 A

### [Summary of Invention]

The present inventors have found a new problem of taste disharmony (generation of a heavy texture and reduction of acidic lightness) felt for a lactic acid bacteria-containing beverage.

The present inventors have now found that the taste disharmony is improved by allowing a lactic acid bacteria-containing beverage to contain at least one ingredient selected from the group consisting of acetoin, diacetyl, 2-heptanone, acetic acid, propionic acid, and caproic acid in a specific concentration range. The present invention is based on this finding.

Accordingly, the present invention provides a lactic acid bacteria-containing beverage with the taste disharmony improved and a method for producing the same.

Specifically, the present invention provides the following inventions.
(1) A lactic acid bacteria-containing beverage, comprising: at least one ingredient selected from the group consisting of acetoin, diacetyl, 2-heptanone, acetic acid, propionic acid, and caproic acid,
   wherein A + B + 200C + 10D + 10E + 10F is 0.2 or more, where A is the concentration of acetoin (ppm), B is the concentration of diacetyl (ppm), C is the concentration of 2-heptanone (ppm), D is the concentration of acetic acid (ppm), E is the concentration of propionic acid (ppm), and F is the concentration of caproic acid (ppm).
(2) The lactic acid bacteria-containing beverage according to (1) above, wherein the A + B + 200C + 10D + 10E + 10F is 0.3 or more.
(3) The lactic acid bacteria-containing beverage according to (1) above, wherein the A + B + 200C + 10D + 10E + 10F is 0.4 or more.
(4) The lactic acid bacteria-containing beverage according to any one of (1) to (3) above, wherein the content of lactic acid bacteria is 4 × 10⁹ to 4 × 10¹¹ cells per 100 mL.
(5) The lactic acid bacteria-containing beverage according to any one of (1) to (3) above, wherein the alcohol concentration in the lactic acid bacteria-containing beverage is 3 to 15 v/v%.
(6) A method for producing a lactic acid bacteria-containing beverage, comprising the step of:
   adjusting the concentration of at least one ingredient selected from the group consisting of acetoin, diacetyl, 2-heptanone, acetic acid, propionic acid, and caproic acid and allowing the beverage to contain lactic acid bacteria,
   wherein A + B + 200C + 10D + 10E + 10F is adjusted to 0.2 or more, where A is the concentration of acetoin (ppm), B is the concentration of diacetyl (ppm), C is the concentration of 2-heptanone (ppm), D is the concentration of acetic acid (ppm), E is the concentration of propionic acid (ppm), and F is the concentration of caproic acid (ppm).
(7) A method for improving the taste disharmony in a lactic acid bacteria-containing beverage, comprising the step of:
   adjusting the concentration of at least one ingredient selected from the group consisting of acetoin, diacetyl, 2-heptanone, acetic acid, propionic acid, and caproic acid,
   wherein A + B + 200C + 10D + 10E + 10F is adjusted to 0.2 or more, where A is the concentration of acetoin (ppm), B is the concentration of diacetyl (ppm), C is the concentration of 2-heptanone (ppm), D is the concentration of acetic acid (ppm), E is the concentration of propionic acid (ppm), and F is the concentration of caproic acid (ppm).

The present invention can improve the taste disharmony (generation of a heavy texture and reduction of acidic lightness) in a lactic acid bacteria-containing beverage. When the lactic acid bacteria-containing beverage is an alcoholic beverage which contains an alcohol, the unpleasant alcoholic taste (harsh taste) can also be reduced.

### [Detailed Description of the Invention]

In the present invention, the term "alcoholic beverage" refers to a beverage containing ethanol, and preferably a beverage having an alcohol content of 1% or more which is considered as an alcoholic beverage under the Liquor Tax Law.

In the present invention, the term "non-alcoholic beverage" refers to a beverage having an alcohol content of less than 1% which is not considered as an alcoholic beverage under the Liquor Tax Law. In particular, such a "non-alcoholic beverage" which does not contain alcohol at all, specifically, such a beverage having an alcohol content of 0 v/v%, can be described as a "completely alcohol-free beverage."

In the present invention, the term "taste disharmony" refers to generation and enhancement of a heavy texture and reduction of acidic lightness.

In the present invention, the unit "ppm" is synonymous with "mg/L," and the unit "ppb" synonymous with "µg/L."

The beverage of the present invention contains lactic acid bacteria. Lactic acid bacteria contained in the beverage of the present invention should be bacteria which generate energy by decomposing sugar to produce lactic acid, and examples thereof include, though not particularly limited to, Lactobacillus spp., Oenococcus spp., Pediococcus spp., Lactococcus spp., or combinations thereof, with Lactobacillus spp. or Lactococcus spp. or combinations thereof being preferable. Examples of the lactic acid bacteria belonging to Lactobacillus spp. include Lactobacillus plantarum, Lactobacillus rhamnosus, Lactobacillus paracasei, Lactobacillus amylovorus, Lactobacillus gasseri, Lactobacillus casei, Lactobacillus reuteri, Lactobacillus acidophilus, Lactobacillus crispatus, Lactobacillus gallinarum, Lactobacillus brevis, Lactobacillus fermentum, and Lactobacillus johnsonii, with Lactobacillus plantarum being preferable. Other examples of the lactic acid bacteria belonging to Lactobacillus spp. include Lactobacillus acidophilus (such as Lactobacillus acidophilus strain L-92), Lactobacillus delbrueckii subsp. bulgaricus (such as Lactobacillus bulgaricus strain OLL1073R-1), Lactobacillus delbrueckii subsp. delbrueckii, Lactobacillus delbrueckii subsp. lactis, Lactobacillus casei, Lactobacillus paracasei (such as Lactobacillus paracasei strain KW3110 and Lactobacillus paracasei strain MCC1849), Lactobacillus gasseri (such as Lactobacillus gasseri strain SBT2055), Lactobacillus helveticus, Lactobacillus johnsonii, Lactobacillus plantarum; newly classified as Lactiplantibacillus plantarum (such as Lactobacillus plantarum strain L-137), Lactobacillus brevis, Lactobacillus casei subsp. rhamnosus (such as Lactobacillus rhamnosus strain GG and Lactobacillus rhamnosus strain CRL1505), and Lactobacillus pentosus; newly classified as Lactiplantibacillus pentosus (such as Lactiplantibacillus pentosus strain ONRICb0240). Examples of the lactic acid bacteria belonging to Oenococcus spp. include Oenococcus oeni. Examples of the lactic acid bacteria belonging to Pediococcus spp. include Pediococcus damnosus and Pediococcus pentsaceus. Examples of the lactic acid bacteria belonging to Lactococcus spp. include Lactococcus lactis, Lactococcus lactis subsp. lactis, Lactococcus garvieae, Lactococcus lactis subsp. cremoris, and Lactococcus lactis subsp. hordniae, with Lactococcus lactis being preferable. Other examples of the lactic acid bacteria belonging to Lactococcus spp. include Lactococcus lactis subsp. lactis JCM5805, Lactococcus lactis subsp. lactis JCM20101, Lactococcus lactis subsp. lactis NBRC12007, Lactococcus lactis subsp. lactis NRIC1150, Lactococcus lactis subsp. lactis JCM7638, and Lactococcus lactis subsp. lactis ATCC11454. Such lactic acid bacteria may be used alone or in combination.

Lactic acid bacteria contained in the beverage of the present invention may be either live lactic acid bacteria or dead lactic acid bacteria, but are preferably dead lactic acid bacteria. Dead lactic acid bacteria can be produced by sterilizing live lactic acid bacteria using means such as heating or irradiation. The form of the dead bacteria is not particularly limited, and may be either sterilized lactic acid bacteria themselves, or such bacteria processed by physical processing such as grinding or drying.

The content of lactic acid bacteria in the lactic acid bacteria-containing beverage of the present invention is not particularly limited and may be appropriately adjusted according to the flavor or the like of the intended beverage. The number of lactic acid bacterial cells in 100 mL of the beverage can be selected in the range of, for example, 1 × 10⁸ to 8 × 10¹¹ cells per 100 mL, preferably 4 × 10⁹ to 400 × 10¹¹ cells per 100 mL, more preferably 5x 10⁹ to 2 × 10¹¹ cells per 100 mL, still more preferably 5 × 10⁹ to 1 × 10¹¹ cells per 100 mL, yet more preferably 1 × 10¹⁰ to 7 × 10¹⁰ cells per 100 mL, further preferably 2 × 10¹⁰ to 60 × 10¹⁰ cells per 100 mL, and still further preferably 3 × 10¹⁰ to 5 × 10¹⁰ cells per 100 mL. Lactic acid bacteria are also known to have various health-improving functions such as functions of improving (maintaining or enhancing) the immunity, and are further known to have an effect of reducing the unpleasant feeling in the nose caused by outdoor or indoor dust or the like. Accordingly, the content of lactic acid bacteria in the lactic acid bacteria-containing beverage of the present invention may be adjusted to be beneficial for such a function or effect.

The lactic acid bacteria-containing beverage of the present invention contains at least one ingredient selected from the group consisting of acetoin, diacetyl, 2-heptanone, acetic acid, propionic acid, and caproic acid. Such a beverage can be produced by adjusting the concentration of the ingredient in the beverage. The concentration of the ingredient may be adjusted by adding the ingredient, or may be adjusted by blending a raw material containing the ingredient or by increasing or decreasing the amount of the raw material blended.

For the concentrations of the ingredients in the lactic acid bacteria-containing beverage of the present invention, A + B + 200C + 10D + 10E + 10F is 0.2 or more, preferably 0.3 or more, more preferably 0.4 or more, and still more preferably 0.5 or more, where A is the concentration of acetoin (ppm), B is the concentration of diacetyl (ppm), C is the concentration of 2-heptanone (ppm), D is the concentration of acetic acid (ppm), E is the concentration of propionic acid (ppm), and F is the concentration of caproic acid (ppm). Although the upper limits of the concentrations of such ingredients are not particularly limited, the upper limit for acetoin can be 100 ppm, and preferably 50 ppm, the upper limit for diacetyl can be 100 ppm, preferably 50 ppm, and more preferably 10 ppm, the upper limit for 2-heptanone can be 5 ppm, and preferably 2.5 ppm, the upper limit for acetic acid can be 10 ppm, and preferably 5 ppm, the upper limit for propionic acid can be 10 ppm, preferably 5 ppm, and more preferably 1 ppm, and the upper limit for caproic acid can be 10 ppm, preferably 5 ppm, and more preferably 1 ppm, for example, from the viewpoint of palatability of the lactic acid bacteria-containing beverage.

According to a preferred embodiment of the present invention, for the concentrations of the ingredients in the lactic acid bacteria-containing beverage of the present invention, A + B + 20C + 10D + 10E + 10F is 1 or more, and more preferably 10 or more, where A is the concentration of acetoin (ppm), B is the concentration of diacetyl (ppm), C is the concentration of 2-heptanone (ppm), D is the concentration of acetic acid (ppm), E is the concentration of propionic acid (ppm), and F is the concentration of caproic acid (ppm).

According to a preferred embodiment of the present invention, the lactic acid bacteria-containing beverage of the present invention contains at least one ingredient selected from the group consisting of acetoin, 2-heptanone, and acetic acid.

According to a preferred embodiment of the present invention, the lactic acid bacteria-containing beverage of the present invention contains at least two ingredients, and more preferably at least three ingredients, selected from the group consisting of acetoin, diacetyl, 2-heptanone, acetic acid, propionic acid, and caproic acid. For example, according to an embodiment of the present invention, the lactic acid bacteria-containing beverage of the present invention contains at least two ingredients, and more preferably at least three ingredients, selected from the group consisting of acetoin, 2-heptanone, and acetic acid.

The concentrations of the ingredients in the lactic acid bacteria-containing beverage of the present invention can be measured by GC/MS analysis. Here, for more accurate concentration measurement, it is desirable to use a calibration curve generated based on measurements of several control samples having known concentrations of the ingredients. Examples of GC/MS conditions are shown in Table 1 below.

**[Table 1]**

| Table 1: GC/MS conditions |
|---|
| Instrument names: GC: Agilent 7890B, MS: 7000D GC/TQ |
| Column: Agilent J&W GC VF-5ms |
| Length: 30 m |
| Inner diameter: 0.25 mm |
| Membrane thickness: 0.25 µm |
| Carrier gas (helium) flow rate: 1.15 mL/min |
| Temperature gradient: held at 40°C for 3 min, then raised to 300°C at 10°C/min, then held for 5 min |
| Liquid injection volume: 1 µL |
| Split ratio: 10:1 |
| MS analysis in scan mode |

The lactic acid bacteria-containing beverage of the present invention may be either of an alcoholic beverage and a non-alcoholic beverage. According to an embodiment of the present invention, the lactic acid bacteria-containing beverage of the present invention is an alcoholic beverage. According to another embodiment of the present invention, the lactic acid bacteria-containing beverage of the present invention is a non-alcoholic beverage.

The alcohol concentration in the lactic acid bacteria-containing beverage of the present invention is not particularly limited, but is preferably 1 to 20 v/v%, more preferably 3 to 15 v/v%, and still more preferably 3 to 12 v/v%. The alcohol concentration can be adjusted by adding an ethanol-containing material confirmed to be safe as food. Raw material alcohols and distilled liquors (spirits) can be used as ethanol-containing materials. Preferred examples of the distilled liquors include vodka, shochu, tequila, rum, gin, and whiskey.

`The lactic acid bacteria-containing beverage of the present invention may contain other ingredients used for producing beverages. Sweeteners (such as sugar, glucose, fructose, oligosaccharides, isomerized liquid sugar, sugar alcohols, and high-intensity sweeteners), acidulants (such as citric acid, malic acid, lactic acid, tartaric acid, phosphoric acid, phytic acid, itaconic acid, fumaric acid, gluconic acid, adipic acid, or salts thereof), dyes, and food additives (such as foaming and foam retention improvers, bitterants, preservatives, antioxidants, thickening stabilizers, emulsifiers, dietary fiber, and pH adjusters) can be appropriately added as such other ingredients, for example.

The lactic acid bacteria-containing beverage of the present invention can be provided as a beverage into which carbon dioxide is injected, i.e., a carbonated beverage. The carbon dioxide gas pressure can be appropriately adjusted according to preference, and can be adjusted in the range of 0.05 to 0.4 MPa (gas pressure at 20°C), for example.

The pH of the lactic acid bacteria-containing beverage of the present invention can be adjusted to, for example, 2.0 to 5.0, preferably 2.5 to 4.5, and more preferably 3.0 to 4.2. The pH of the beverage can be readily measured using a commercially available pH meter.

The lactic acid bacteria-containing beverage of the present invention is preferably provided as a beverage bottled in a container. The container used for the lactic acid bacteria-containing beverage of the present invention should be a container conventionally used for packing of beverages. Examples thereof include metallic cans, barrel containers, plastic bottles (such as PET bottles and cups), paper containers, bottles, and pouch containers, with metallic cans, barrel containers, plastic bottles (such as PET bottles), or bottles being preferable.

According to an embodiment of the present invention, the lactic acid bacteria-containing beverage of the present invention can be produced according to a conventional method for producing a beverage, except for the adjustment of the concentrations of the above ingredients. For example, the flavor is first adjusted by adding an acidulant, a flavoring agent, and as necessary, sugar or a sweetener to an aqueous solution containing dead lactic acid bacteria in a tank. Carbon dioxide gas is then added to the aqueous solution with the flavor adjusted. Thus, a carbon dioxide gas-containing beverage can be produced. The lactic acid bacteria-containing beverage of the present invention can be produced by adding the above ingredients or a material containing the above ingredients appropriately at any stage in such a production process.

According to another embodiment of the present invention, there is provided a method for improving the taste disharmony (generation of a heavy texture and reduction of acidic lightness) in a lactic acid bacteria-containing beverage. The method comprises the step of adjusting the concentration of at least one ingredient selected from the group consisting of acetoin, diacetyl, 2-heptanone, acetic acid, propionic acid, and caproic acid, wherein A + B + 200C + 10D + 10E + 10F is adjusted to 0.2 or more, where A is the concentration of acetoin (ppm), B is the concentration of diacetyl (ppm), C is the concentration of 2-heptanone (ppm), D is the concentration of acetic acid (ppm), E is the concentration of propionic acid (ppm), and F is the concentration of caproic acid (ppm).

According to still another embodiment of the present invention, there is provided a method for reducing the unpleasant alcoholic taste (harsh taste) in a lactic acid bacteria-containing beverage which is an alcoholic beverage. The method comprises the step of adjusting the concentration of at least one ingredient selected from the group consisting of acetoin, diacetyl, 2-heptanone, acetic acid, propionic acid, and caproic acid, wherein A + B + 200C + 10D + 10E + 10F is adjusted to 0.2 or more, where A is the concentration of acetoin (ppm), B is the concentration of diacetyl (ppm), C is the concentration of 2-heptanone (ppm), D is the concentration of acetic acid (ppm), E is the concentration of propionic acid (ppm), and F is the concentration of caproic acid (ppm).

### [Examples]

The present invention will be specifically described by way of examples below, but the present invention is not limited to such examples.

### Example 1: Preliminary examination of the problem and the solution for lactic acid bacteria-containing beverages

Base beverage samples (without a flavoring agent) containing an acidulant, a sweetener, and alcohol (ethanol; 3, 5, 7 or 9 v/v%) were prepared as tasting samples, and the samples to which dead lactic acid bacteria were added were compared with the samples to which dead lactic acid bacteria were not added. As a result, it was revealed that the addition of lactic acid bacteria caused taste disharmony (generation of a heavy texture and reduction of acidic lightness). It was also revealed that an unpleasant alcoholic taste (harsh taste) due to the addition of lactic acid bacteria was remarkable in a sample having a high alcohol concentration.

Next, it was examined whether or not the above problem can be solved by the addition of various aroma ingredients. As a result, it was found that the problem can be dose-dependently solved when acetoin (tested at 0.1 to 10 ppm), diacetyl (tested at 0.01 to 1 ppm), 2-heptanone (tested at 0.005 to 0.5 ppm), acetic acid (tested at 0.01 to 1 ppm), propionic acid (tested at 0.01 to 1 ppm), and caproic acid (tested at 0.005 to 0.5 ppm) are each added independently.

Among such aroma ingredients, acetoin and diacetyl imparted acidic thickness, sweetness, and a milky taste from the middle to the latter half of the tasting, suggesting that they can solve the problem by the same action. It was also suggested that diacetyl can solve the problem at a concentration lower than that of acetoin. It was further suggested that 2-heptanone can solve the problem at a concentration lower than those of the other aroma ingredients. Acetic acid, propionic acid, and caproic acid imparted an acidic taste from the beginning to the first half of the tasting and maintained the acidic taste afterwards, suggesting that they can solve the problem by the same action. It was also suggested that caproic acid can solve the problem at a concentration lower than those of acetic acid and propionic acid.

### Example 2: Examination of the effect of aroma ingredients in lactic acid bacteria-containing beverages

The conditions of use were examined in more detail for acetoin, diacetyl, 2-heptanone, acetic acid, propionic acid, and caproic acid confirmed to be effective in Example 1.

### (1) Tasting samples

In this example, all tasting samples were prepared from a base beverage sample having the following ingredients and pH:
· No fruit juice
· Alcohol concentration: 3 v/v% or 9 v/v%;
· Acidulants (citric acid and sodium citrate);
· Sweeteners (acesulfame K and sucralose);
· Lactic acid bacteria (dead) (Lactococcus lactis and Lactobacillus plantarum): 4 × 10¹⁰ cells per 100 mL;
· pH: 3.4;
· Carbon dioxide gas pressure: 0.23 MPa.

Various amounts of acetoin, diacetyl, 2-heptanone, acetic acid, propionic acid, and caproic acid were each added alone or in a specific combination to the base beverage sample (negative control).

### (2) Sensory evaluation

Sensory evaluation was carried out by five adequately trained panelists. The two evaluation points were: the effect of improving the taste disharmony (generation and enhancement of a heavy texture and reduction of acidic lightness); and the effect of reducing the unpleasant alcoholic taste (harsh taste). The sensory evaluation was scored by five stages in 0.5 increments: 1 (equivalent to the negative control), 2 (the effect was slightly observed by serial comparison with the negative control), 3 (the effect was observed by serial comparison with the negative control, but was not observed without comparison), 4 (the effect was observed even without comparison with the negative control), and 5 (the effect was clearly observed even without comparison with the negative control). Here, the score for the negative control tasting sample (the base beverage sample) was 1.0, and the score for a beverage sample (positive control) which was the same as the base beverage sample except for not containing lactic acid bacteria was 5.0. The evaluation results were provided as means of the scores from the five panelists with standard deviations.

### (3) Confirmation of the effect of acetoin, diacetyl, 2-heptanone, acetic acid, propionic acid, and caproic acid each added alone

Tasting samples to which acetoin, diacetyl, 2-heptanone, acetic acid, propionic acid, and caproic acid were each added alone were prepared and evaluated by sensory evaluation. The results are shown in the table below.

**[Table 2]**

| Table 2: Results of sensory evaluation when the ingredients were each added alone | | | | | | | |
|---|---|---|---|---|---|---|---|
| · The effect of improving the taste disharmony (generation of a heavy texture and reduction of acidic liqhtness) | | | | | | | |
| | | Mean | SD | Mean | SD | Mean | SD |
| | Acetoin | 0.5 ppm | | 1 ppm | | 10 ppm | |
| | | 2.6 | 0.8 | 3.5 | 0.4 | 3.9 | 0.2 |
| | Diacetyl | - | | 1 ppm | | - | |
| | | | | 3.3 | 0.2 | | |
| Alc 3% | 2-Heptanone | 0.0025 ppm | | 0.05 ppm | | 0.5 ppm | |
| | | 2.4 | 0.7 | 3.4 | 0.4 | 4.0 | 0.3 |
| | Acetic acid | 0.05 ppm | | 0.1 ppm | | 1 ppm | |
| | | 2.6 | 0.4 | 3.7 | 0.4 | 4.2 | 0.5 |
| | Propionic acid | - | | 0.1 ppm | | - | |
| | | | | 3.7 | 0.4 | | |
| | Caproic acid | - | | 0.1 ppm | | - | |
| | | | | 3.4 | 0.4 | | |
| | Acetoin | - | | 1 ppm | | - | |
| | | | | 3.5 | 0.3 | | |
| | Diacetyl | - | | 1 ppm | | - | |
| | | | | 3.2 | 0.2 | | |
| | 2-Heptanone | - | | 0.05 ppm | | - | |
| Alc 9% | | | | 3.6 | 0.4 | | |
| | Acetic acid | - | | 0.1 ppm | | - | |
| | | | | 3.9 | 0.5 | | |
| | Propionic acid | - | | 0.1 ppm | | - | |
| | | | | 3.5 | 0.3 | | |
| | Caproic acid | - | | 0.1 ppm | | - | |
| | | | | 3.5 | 0.4 | | |

| | | | | | | | |
|---|---|---|---|---|---|---|---|
| *Alc = Alcohol (ethanol) concentrations in tasting samples (v/v%) | | | | | | | |

**[Table 3]**

| Table 3: Results of sensory evaluation when the ingredients were each added alone | | | | | | | |
|---|---|---|---|---|---|---|---|
| · The effect of removing the unpleasant alcoholic taste (harsh taste) | | | | | | | |
| | | Mean | SD | Mean | SD | Mean | SD |
| | Acetoin | 0.5 ppm | | 1 ppm | | 10 ppm | |
| | | 2.2 | 0.2 | 3.0 | 0.0 | 3.9 | 0.2 |
| | Diacetyl | - | | 1 ppm | | - | |
| | | | | 3.4 | 0.4 | | |
| | 2-Heptanone | 0.0025 ppm | | 0.05 ppm | | 0.5 ppm | |
| Alc 9% | | 2.5 | 0.4 | 3.3 | 0.4 | 4.1 | 0.5 |
| | Acetic acid | 0.05 ppm | | 0.1 ppm | | 1 ppm | |
| | | 2.5 0.4 | | 3.4 | 0.4 | 4.1 | 0.5 |
| | Propionic acid | - | | 0.1 ppm | | - | |
| | | | | 3.3 | 0.6 | | |
| | Caproic acid | - | | 0.1 ppm | | - | |
| | | | | 3.4 | 0.5 | | |

| | | | | | | | |
|---|---|---|---|---|---|---|---|
| *Alc = Alcohol (ethanol) concentrations in tasting samples (v/v%) | | | | | | | |

From this table, it was found that acetoin, 2-heptanone, and acetic acid exhibited dose-dependent effects of improving the taste disharmony (generation and enhancement of a heavy texture and reduction of acidic lightness) and reducing the unpleasant alcoholic taste (harsh taste). Diacetyl was expected to exhibit an effect equivalent to that of acetoin, and propionic acid and caproic acid were expected to exhibit an effect equivalent to that of acetic acid. The effects were observed as expected, as shown in the table above.

### (4) Confirmation of the effect when multiple ingredients were combined and added

The effect of improving the taste disharmony (generation and enhancement of a heavy texture and reduction of acidic lightness) was examined for the case where multiple ingredients among acetoin, 2-heptanone, and acetic acid were combined and added. A + 200C + 10D was 0.3 for a tasting sample of a combination of two ingredients and 0.4 for a tasting sample of a combination of three ingredients, where the concentration of acetoin was A (ppm), the concentration of 2-heptanone was C (ppm), and the concentration of acetic acid was D (ppm). The results are shown in the table below.

**[Table 4]**

| Table 4: Results of sensory evaluation when multiple ingredients were combined and added | | | |
|---|---|---|---|
| · The effect of improving the taste disharmony (generation of a heavy texture and reduction of acidic lightness) | | | |
| | | Mean | SD |
| Alc 3% | Acetoin (0.2 ppm) × 2-heptanone (0.001 ppm) | 3.0 | 0.9 |
| | 2-Heptanone (0.001 ppm) × acetic acid (0.02 ppm) | 3.0 | 1.3 |
| | Acetoin (0.2 ppm) × acetic acid (0.02 ppm) | 3.2 | 1.1 |
| | Acetoin (0.1 ppm) × 2-heptanone (0.0005 ppm) × acetic acid (0.01 ppm) | 3.0 | 1.1 |

| | | | |
|---|---|---|---|
| *Alc = Alcohol (ethanol) concentrations in tasting samples (v/v%) | | | |

From this table, it was found that multiple ingredients combined and added were more effective than a single ingredient added alone. It was also found that a combination of three ingredients was more effective than a combination of two ingredients. The evaluation results from Examples 1 and 2(3) further suggested that diacetyl can be used in the same manner as acetoin, and that propionic acid and caproic acid can be used in the same manner as acetic acid.

### (5) Confirmation of the effect when other acidulants were used

The same experiment as above was carried out using a combination of three acidulants in which lactic acid was combined with the above-described combination of citric acid and sodium citrate. The same results were obtained.

### Example 3: Examination of the effect of aroma ingredients in lactic acid bacteria-containing beverages (2)

In this example, in order to confirm the effect in non-alcoholic beverages, the same examination as in Example 2 was carried out using a base beverage sample having an alcohol (ethanol) concentration of 0 v/v%.

### (1) Tasting samples

The details of the base beverage sample will be shown below:
· No fruit juice
· Alcohol concentration: 0 v/v%;
· Acidulants (citric acid and sodium citrate);
· Sweeteners (acesulfame K and sucralose);
· Lactic acid bacteria (dead) (Lactococcus lactis): 4 × 10¹⁰ cells per 100 mL;
· pH: 3.4;
· Carbon dioxide gas pressure: 0.16 MPa.

Various amounts of acetoin, diacetyl, 2-heptanone, acetic acid, propionic acid, and caproic acid were each added alone or in a specific combination to the base beverage sample (negative control).

### (2) Sensory evaluation

Sensory evaluation was carried out by five adequately trained panelists. The evaluation point was the effect of improving the taste disharmony (generation and enhancement of a heavy texture and reduction of acidic lightness). The sensory evaluation was scored by five stages in 0.5 increments: 1 (equivalent to the negative control), 2 (the effect was slightly observed by serial comparison with the negative control), 3 (the effect was observed by serial comparison with the negative control, but was not observed without comparison), 4 (the effect was observed even without comparison with the negative control), and 5 (the effect was clearly observed even without comparison with the negative control). Here, the score for the negative control tasting sample (the base beverage sample) was 1.0, and the score for a beverage sample (positive control) which was the same as the base beverage sample except for not containing lactic acid bacteria was 5.0. The evaluation results were provided as means of the scores from all the panelists with standard deviations.

### (3) Confirmation of the effect of acetoin, diacetyl, 2-heptanone, acetic acid, propionic acid, and caproic acid each added alone

Tasting samples to which acetoin, diacetyl, 2-heptanone, acetic acid, propionic acid, and caproic acid were each added alone were prepared and evaluated by sensory evaluation. The results are shown in the table below.

**[Table 5]**

| Table 5: Results of sensory evaluation when the ingredients were each added alone | | | | | | | |
|---|---|---|---|---|---|---|---|
| · The effect of improving the taste disharmony (generation of a heavy texture and reduction of acidic lightness) | | | | | | | |
| | | Mean | SD | Mean | SD | Mean | SD |
| | Acetoin | 0.5 ppm | | 1 ppm | | 10 ppm | |
| | | 2.7 | 0.4 | 3.0 | 0.3 | 3.4 | 0.8 |
| | Diacetyl | - | | 1 ppm | | - | |
| | | | | 3.6 | 0.4 | | |
| | 2-Heptanone | 0.0025 ppm | | 0.05 ppm | | 0.5 ppm | |
| Alc 0% | | 3.2 | 0.7 | 3.7 | 0.4 | 4.4 | 0.5 |
| | Acetic acid | 0.05 ppm | | 0.1 ppm | | 1 ppm | |
| | | 3.2 | 0.4 | 3.6 | 0.5 | 3.7 | 0.4 |
| | Propionic acid | | | 0.1 ppm | | | |
| | | | | 3.4 | 0.5 | | |
| | Caproic acid | - | | 0.1 ppm | | - | |
| | | | | 3.2 | 0.4 | | |

| | | | | | | | |
|---|---|---|---|---|---|---|---|
| *Alc = Alcohol (ethanol) concentrations in tasting samples (v/v%) | | | | | | | |

From this table, it was found that acetoin, 2-heptanone, and acetic acid also exhibited a dose-dependent effect of improving the taste disharmony (generation and enhancement of a heavy texture and reduction of acidic lightness) in non-alcoholic beverages. Diacetyl was expected to exhibit an effect equivalent to that of acetoin, and propionic acid and caproic acid were expected to exhibit an effect equivalent to that of acetic acid. The effects were observed as expected, as shown in the table above.

### (4) Confirmation of the effect when multiple ingredients were combined and added

The effect of improving the taste disharmony (generation and enhancement of a heavy texture and reduction of acidic lightness) was examined for the case where multiple ingredients among acetoin, 2-heptanone, and acetic acid were combined and added. The results are shown in the table below.

**[Table 6]**

| Table 6: Results of sensory evaluation when multiple ingredients were combined and added | | | |
|---|---|---|---|
| · The effect of improving the taste disharmony (generation of a heavy texture and reduction of acidic lightness) | | | |
| | | Mean | SD |
| Alc 0% | Acetoin (0.2 ppm) × 2-heptanone (0.001 ppm) | 3.8 | 0.7 |
| | 2-Heptanone (0.001 ppm) × acetic acid (0.01 ppm) | 3.7 | 0.6 |
| | Acetoin (0.2 ppm) x acetic acid (0.02 ppm) | 3.8 | 0.5 |
| | Acetoin (0.1 ppm) × 2-heptanone (0.0005 ppm) × acetic acid (0.01 ppm) | 4.4 | 0.6 |

| | | | |
|---|---|---|---|
| *Alc = Alcohol (ethanol) concentrations in tasting samples (v/v%) | | | |

From this table, it was found that multiple ingredients combined and added were also more effective than a single ingredient added alone in non-alcoholic beverages. It was also found that a combination of three ingredients was more effective than a combination of two ingredients. The evaluation results from Examples 1 and 3(3) further suggested that diacetyl can be used in the same manner as acetoin, and that propionic acid and caproic acid can be used in the same manner as acetic acid.

## Claims

1. A lactic acid bacteria-containing beverage, comprising: at least one ingredient selected from the group consisting of acetoin, diacetyl, 2-heptanone, acetic acid, propionic acid, and caproic acid,
wherein A + B + 200C + 10D + 10E + 10F is 0.2 or more, where A is the concentration of acetoin (ppm), B is the concentration of diacetyl (ppm), C is the concentration of 2-heptanone (ppm), D is the concentration of acetic acid (ppm), E is the concentration of propionic acid (ppm), and F is the concentration of caproic acid (ppm).

2. The lactic acid bacteria-containing beverage according to claim 1, wherein the A + B + 200C + 10D + 10E + 10F is 0.3 or more.

3. The lactic acid bacteria-containing beverage according to claim 1, wherein the A + B + 200C + 10D + 10E + 10F is 0.4 or more.

4. The lactic acid bacteria-containing beverage according to any one of claims 1 to 3, wherein the content of lactic acid bacteria is 4 × 10⁹ to 4 × 10¹¹ cells per 100 mL.

5. The lactic acid bacteria-containing beverage according to any one of claims 1 to 3, wherein the alcohol concentration in the lactic acid bacteria-containing beverage is 3 to 15 v/v%.

6. A method for producing a lactic acid bacteria-containing beverage, comprising the step of:
adjusting the concentration of at least one ingredient selected from the group consisting of acetoin, diacetyl, 2-heptanone, acetic acid, propionic acid, and caproic acid and allowing the beverage to contain lactic acid bacteria,
wherein A + B + 200C + 10D + 10E + 10F is adjusted to 0.2 or more, where A is the concentration of acetoin (ppm), B is the concentration of diacetyl (ppm), C is the concentration of 2-heptanone (ppm), D is the concentration of acetic acid (ppm), E is the concentration of propionic acid (ppm), and F is the concentration of caproic acid (ppm).

7. A method for improving the taste disharmony in a lactic acid bacteria-containing beverage, comprising the step of:
adjusting the concentration of at least one ingredient selected from the group consisting of acetoin, diacetyl, 2-heptanone, acetic acid, propionic acid, and caproic acid,
wherein A + B + 200C + 10D + 10E + 10F is adjusted to 0.2 or more, where A is the concentration of acetoin (ppm), B is the concentration of diacetyl (ppm), C is the concentration of 2-heptanone (ppm), D is the concentration of acetic acid (ppm), E is the concentration of propionic acid (ppm), and F is the concentration of caproic acid (ppm).
